# EUROPEAN PATENT APPLICATION

(11) **EP 4 749 039 A1**
(43) Date of publication of application: **27.05.2026**
(21) Application number: 25209524.5
(22) Date of filing: 17.10.2025
(51) Int. Cl.: E03C 1/04, E03C 1/05, B05B 1/18

(54) **USER-INITIATED COLD EXPERIENCE DURING SHOWER EVENT**

(30) Priority: 20.11.2024 GB 202417047
(71) Applicant: Kohler Mira Limited, Cheltenham, Gloucestershire GL52 5EP (GB)
(72) Inventor: HOBBS, Barry, Cheltenham, Gloucestershire GL52 5EP (GB); GROVES, Sophie, Cheltenham, Gloucestershire GL52 5EP (GB); BELLONI, Anna, Cheltenham, Gloucestershire GL52 5EP (GB); PASSALACQUA, Martino, Cheltenham, Gloucestershire GL52 5EP (GB)
(74) Representative: Barker Brettell LLP

(57) **Abstract**

An ablutionary system 100 configured to provide water from at least one shower head 110, 120 to a user is provided. The ablutionary system includes a shower control system 150 having a user interface 160. The shower control system 150 is configured to: within an ablutionary event, provide water to a user at a temperature set by the user; and within the same ablutionary event, upon user actuation of a predetermined cold experience indicator of the user interface 160, provide a cold experience to the user. The cold experience includes: a transition phase, during which the shower control system 150 is arranged to reduce the temperature of the water down to a predefined cold temperature, which predefined cold temperature is below a normal range of user-preferred temperatures for showering, wherein the predefined cold temperature is either a predetermined temperature or the natural temperature of the water when no hot water is supplied; and a cold phase, during which the shower control system 150 is arranged to provide water at the predefined cold temperature for a predetermined time. The ablutionary system is arranged to cease to provide water to the user once the predetermined time has passed.

## Description

### TECHNICAL FIELD

The present disclosure relates generally to ablutionary systems and methods for providing a cold experience.

### BACKGROUND

Shower control systems which allow a user to select different "shower types", e.g. a "tropical rain shower", are common in spas. There are also shower control systems which provide the user with a spa experience at home through the use of customized multidimensional temperature profiles.

### SUMMARY

In prior art shower control systems, the user typically selects a particular "shower type" and then begins showering. However, a user who desires to have a very cold shower may find it difficult to begin showering at this temperature. It is of course possible for the user to manually lower the temperature gradually, but many users find it difficult to push themselves to a low enough temperature when they are in control. There is thus a need for an ablutionary system that provides a user-initiated cold experience during a shower event.

An ablutionary system configured to provide water from at least one shower head to a user includes a shower control system having a user interface. The shower control system may be configured to: within an ablutionary event (a shower), provide water to a user at a temperature set by the user; and within the same ablutionary event (shower), upon user actuation of a predetermined cold experience indicator of the user interface, provide a cold experience to the user. The cold experience may include: a transition phase, during which the shower control system is arranged to reduce the temperature of the water down to a predefined cold temperature, which predefined cold temperature is below a normal range of user-preferred temperatures for showering, wherein the predefined cold temperature is either a predetermined temperature or the natural temperature of the water when no hot water is supplied; and a cold phase, during which the shower control system is arranged to provide water at the predefined cold temperature for a predetermined time, wherein the ablutionary system is arranged to cease to provide water to the user once the predetermined time has passed.

The cold experience is thus initiated by the user during a shower event, when the user is showering according to preferences that the user controls. Once the user has initiated the cold experience, the temperature of the water will be reduced down to a predefined cold temperature, which is maintained for a predetermined time. The cold experience thereby enables the user to push the boundaries of what is comfortable, something that many users find desirable.

In embodiments, the shower control system is configured to provide an emergency stop functionality during the cold experience, by ceasing to provide water to the user upon actuation of an emergency stop. This enables the user to quickly stop the cold experience.

In embodiments, the shower control system is configured to, during the cold experience, provide the emergency stop functionality upon any user actuation of the user interface. This enables the user to quickly stop the cold experience, without having to check exactly which zone or button to touch or press on the user interface.

In embodiments, the shower control system includes a microphone, and is configured to, during the cold experience, provide the emergency stop functionality by reacting to sound of a predetermined kind. This allows the emergency stop functionality to react to the user for example screaming or shouting "STOP!", or to any other sound that has been predetermined to actuate the emergency stop functionality.

In embodiments, the shower control system includes a sensor that senses movement of the user, and is configured to, during the cold experience, provide the emergency stop functionality by reacting to movement of a predetermined kind. This allows the emergency stop functionality to react to for example a forceful waving of the arms by the user, or to any other movement that has been predetermined to actuate the emergency stop functionality.

In embodiments, the predetermined cold experience indicator is a zone or button on the user interface, which zone or button is configured so that the predetermined cold experience indicator is actuated by the zone or button being touched or pressed by the user. This is a simple way for the user to initiate a cold experience.

In embodiments, the user interface is configured to allow the user to select between different predetermined levels of cold experiences, with variations in severity. This could trigger a user to progress through the levels, and thus enhance user experience.

In embodiments, the user interface is configured to display one or more indicators of the progress of the cold experience to the user. It may be easier for a user to continue through the whole cold experience if the user can follow its progress.

In embodiments, the reduction rate of the water temperature is linear. The reduction rate may however not be entirely linear - it could for example be exponential or immediate, or only partly linear. It may be desirable for the reduction of the water temperature to be either gradual or stepped.

A method for providing a cold experience to a user within an ablutionary event may include: within an ablutionary event, providing water from at least one shower head to a user for showering at a temperature set by the user; and within the same ablutionary event, upon user actuation of a predetermined cold experience indicator of a user interface of a shower control system, providing a cold experience to the user. The cold experience may be provided to the user by: during a transition phase, reducing the temperature of the water down to a predefined cold temperature, which predefined cold temperature is below a normal range of user-preferred temperatures for showering, wherein the predefined cold temperature is either a predetermined temperature or the natural temperature of the water when no hot water is supplied; and after the transition phase, providing water at the predefined cold temperature during a cold phase for a predetermined time, and once the predetermined time has passed, ceasing to provide water to the user. This allows a user-initiated cold experience during a shower event.

In embodiments, the transition phase lasts until the temperature reaches the predefined cold temperature or until the user actuates an emergency stop in the shower control system, thereby activating an emergency stop functionality, and the cold phase lasts for a predetermined time or until the user actuates the emergency stop in the shower control system, thereby activating the emergency stop functionality. This enables the user to quickly stop the cold experience.

In embodiments, the method further includes allowing the user to activate the emergency stop functionality through any user actuation of the user interface. This enables the user to quickly stop the cold experience, without having to check exactly which zone or button to touch or press on the user interface.

In embodiments, the method further includes arranging the shower control system to include a microphone, and allowing the user to activate the emergency stop functionality through making a sound of a predetermined kind. This allows the emergency stop functionality to react to the user for example screaming or shouting "STOP!", or to any other sound that has been predetermined to actuate the emergency stop functionality.

In embodiments, the method further includes arranging the shower control system to include a sensor that senses movement of the user, and allowing the user to activate the emergency stop functionality through making a movement of a predetermined kind. This allows the emergency stop functionality to react to for example a forceful waving of the arms by the user, or to any other movement that has been predetermined to actuate the emergency stop functionality.

In embodiments, the method further includes allowing the user to actuate the predetermined cold experience indicator of the user interface by touching or pressing a zone or button on the user interface. This is a simple way for the user to initiate a cold experience.

In embodiments, the method further includes allowing the user to select between different predetermined levels of cold experiences, with variations in severity, on the user interface. This could trigger a user to progress through the levels, and thus enhance user experience.

In embodiments, the method further includes displaying one or more indicators of the progress of the cold experience on the user interface. It may be easier for a user to continue through the whole cold experience if the user can follow its progress.

In embodiments, the method further includes arranging the reduction rate of the water temperature to be linear. The reduction rate may however not be entirely linear - it could for example be exponential or immediate, or only partly linear. It may be desirable for the reduction of the water temperature to be either gradual or stepped.

In embodiments, the shower control system is automatic.

The scope of the invention is defined by the claims, which are incorporated into this section by reference. A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

Fig. 1 illustrates an example ablutionary system, in accordance with one or more embodiments described herein.
Figs. 2a-b and 3a-c illustrate example user interfaces, in accordance with one or more embodiments described herein.
Fig. 4 schematically illustrates an example method for providing a cold experience to a user within an ablutionary event, in accordance with one or more embodiments described herein.

Embodiments of the present disclosure and their advantages are best understood by referring to the detailed description that follows. It should be appreciated that like reference numerals are used to identify like elements illustrated in one or more of the figures.

### DETAILED DESCRIPTION

In prior art shower control systems, the user selects a particular "shower type" and then begins showering. However, a user who desires to have a very cold shower may find it difficult to begin showering at this temperature. It is of course possible for the user to manually lower the temperature gradually, but many users find it difficult to push themselves to a low enough temperature when they are in control.

The claimed ablutionary system provides a user-initiated cold experience during a shower event. The cold experience is initiated by the user during a shower event, when the user is showering according to preferences that the user controls. Once the user has initiated the cold experience, the temperature of the water will be reduced down to a cold temperature, which is maintained for a predetermined time. The cold experience thereby enables the user to push the boundaries of what is comfortable, something that many users find desirable.

The present disclosure relates generally to ablutionary systems and methods providing a cold experience. Embodiments of the disclosed solution are presented in more detail in connection with the figures.

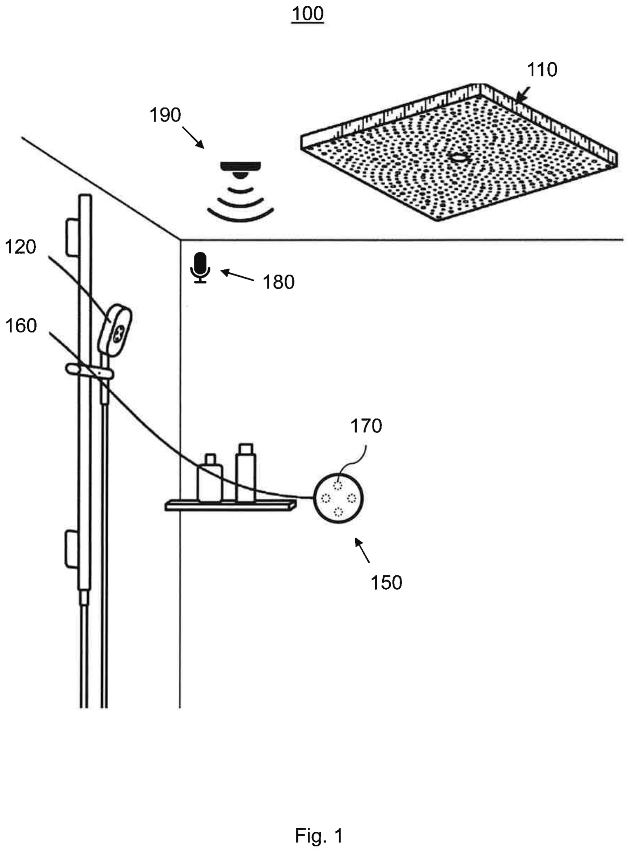

Fig. 1 illustrates an example ablutionary system 100 in which there are two shower heads 110, 120. The illustrated ablutionary system 100 is configured to provide water from any of these shower heads 110, 120 to a user, based on the user interacting with a user interface 160 of a shower control system 150 (which may be an automatic shower control system). On the user interface 160, there are typically zones or buttons which the user may interact with by touching or pressing them. In this way, the user may for example select a suitable temperature for showering. The temperature may be controlled using a digital valve in the shower control system 150.

The illustrated ablutionary system 100 also provides a user-initiated cold experience during a shower event. The user may initiate this cold experience by actuating a predetermined cold experience indicator 170, which in the illustrated example is a zone or button on the user interface 160. If the user while showering touches or presses the cold experience indicator 170 in a predetermined way, a cold experience is initiated.

First, there is a transition phase, during which the temperature is slowly reduced to a predefined cold temperature, below a normal range of user-preferred temperatures for showering. The predefined cold temperature may be a predetermined temperature of typically between 10 and 20 degrees Celsius, for example 15 degrees Celsius. However, the predefined cold temperature may simply be the natural temperature of the water when no hot water is supplied. This temperature is typically below 20 degrees Celsius.

The ablutionary system 100 may for example be arranged to gradually ramp down the inflow of hot water, typically with a linear ramping down, until only cold water is provided. In this case, it may not be necessary to measure the temperature of the cold water. The ramping down could for example include reducing the inflow of hot water with 5% per second, so that it takes 20 seconds until only cold water is provided. If the temperature is measured, the drop may for example be less than 1 degree per second, such as for example 0,5 degrees per second.

The temperature reduction would typically be a slow, linear ramping down of the temperature. The ramping down may however not be entirely linear - it could for example be exponential or immediate, or only partly linear. It may be desirable for the ramping down to be either gradual or stepped.

The ablutionary system 100 may be arranged with a safety feature that ensures that the temperature does not become too low, in case the supplied cold water would be very cold. In this case, some inflow of hot water may remain also during the cold phase.

Once the water is supplied at the predefined cold temperature, the cold phase begins. During the cold phase, water is provided at the predefined cold temperature for a predetermined time. Since the purpose of the cold experience is for users to be able to push themselves to a lower temperature than is comfortable, the user should not be fully in control of the showering during the cold experience. However, in case the cold experience becomes too painful for the user, it is desirable to provide some kind of emergency stop functionality, in which the ablutionary system 100 immediately ceases to provide water to the user. If the user does not activate the emergency stop functionality, the ablutionary system 100 will cease to provide water to the user once the predetermined time has passed. If the user elects to start showering again, the water will be provided at the usual user-preferred temperature for showering.

A user interface 160 for an ablutionary system 100 typically has a "stop" zone or button on the user interface 160. However, if a user wishes for a cold experience to stop immediately, it may take too long to locate the "stop" zone or button on the user interface 160. The emergency stop functionality may therefore be implemented in a way that does not require the user to locate any particular zone or button on the user interface 160.

One way of implementing the emergency stop functionality is to allow the shower control system 150 to interpret any user actuation of the user interface 160 during a cold experience as a request for emergency stop. In this way, any user touching of the user interface 160 during a cold experience would cause the ablutionary system 100 to immediately cease to provide water to the user. If the user interface 160 has functionality to sense nearby movements, it may be enough for a user to wave a hand close to the user interface 160. The shower control system 150 may in examples allow a user to predefine the actions required for an emergency stop to take effect.

The illustrated user interface 160 is shown as a panel in the shower area, but it may alternatively or additionally be implemented in other ways. The user may for example program and/or initiate a cold experience using an app in a mobile device.

The shower control system 150 may in examples have other types of sensors that allow a user to signal the desire for an emergency stop. In Fig. 1, a microphone 180 is schematically illustrated. Such a microphone 180 could be implemented anywhere in the shower control system 150, for example in the user interface panel. If a user interface 160 is implemented using an app in a mobile device, the microphone 180 could be a microphone in the mobile device.

If the shower control system 150 is connected to or includes a microphone 180, the emergency stop functionality could be provided as a reaction to sound of a predetermined kind. This allows the emergency stop functionality to react to the user for example screaming or shouting "STOP!", or to any other sound that has been predetermined to actuate the emergency stop functionality.

In Fig. 1, a sensor 190 that senses movement of the user is schematically illustrated. Such a sensor 190 could be implemented anywhere in the shower control system 150, for example in the user interface panel. If the shower control system 150 is connected to or includes a sensor 190 that senses movement of the user, the emergency stop functionality could be provided as a reaction to movement of a predetermined kind. This allows the emergency stop functionality to react to for example a forceful waving of the arms by the user, or to any other movement that has been predetermined to actuate the emergency stop functionality.

If the user elects to start showering again after an emergency stop, the water will be provided at the usual user-preferred temperature for showering.

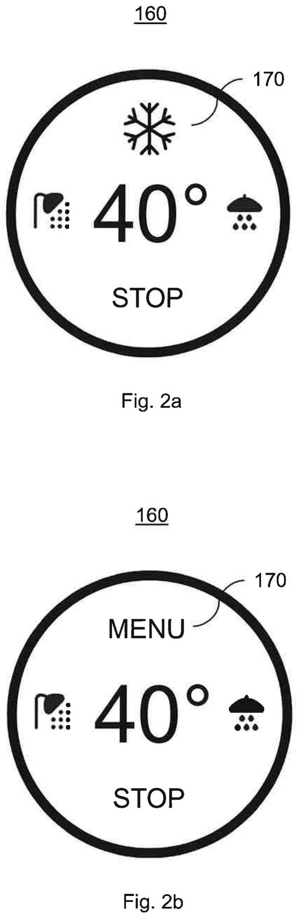

Figs. 2a-b illustrate example user interfaces 160. In the user interface 160 illustrated in Fig. 2a, the cold experience indicator 170 is available directly. However, in the user interface 160 illustrated in Fig. 2b, there is a zone or button marked "MENU". By touching or pressing this zone or button, a user may activate a menu that enables actuation of the cold experience indicator 170. Such a menu may allow the user to also select between different predetermined levels of cold experiences, which may for example be listed as "Beginner", "Intermediate", "Advanced", and "Pro", with variations in severity. A "Beginner" cold experience may for example have a long, slow transition down to the predefined cold temperature, and a shorter cold phase, and the predefined temperature may be higher than for more advanced cold experiences. A "Pro" cold experience may for example have an immediate transition into the predefined cold temperature, a longer cold phase, and optionally also a colder predefined cold temperature. This could trigger a user to progress through the levels to become a "Pro". The user interface 160 may support the user by for example acknowledging user progress, or proposing further progress through the levels.

The shower control system 150 may have functionality for detecting a specific user among a selection of potential users of the ablutionary system 100. The user interface 160 may enable a user to indicate this, or the shower control system 150 may be able to determine which of the potential users that is currently using the ablutionary system 100, based on for example time of day, or various user selections. This may enable the shower control system 150 to provide individual functionality to specific users. The shower control system 150 could in this case track the progress of each user even if there are multiple users of the ablutionary system 100. It would also be possible to block access to the cold experience to certain users, such as for example small children.

Some examples of aspects of the cold experience which could be varied are the predefined cold temperature, the transition time, the reduction rate of the water temperature, the curve shape of reduction (such as e.g. linear, exponential, or immediate), whether the reduction is gradual or stepped, and the flow rate. The user interface 160 may also provide the user with functionality for programming aspects of the transition phase and/or the cold phase, in order to design different personal cold experiences.

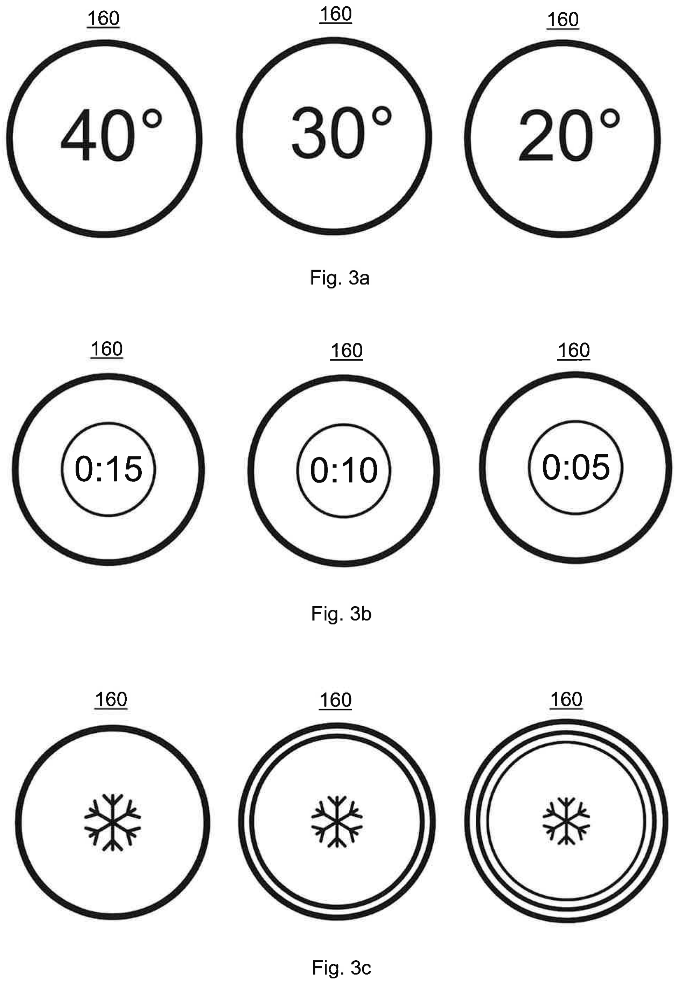

It may be easier for a user to continue through the whole cold experience if the user can follow its progress. Figs. 3a-c illustrate examples of how user interfaces 160 could indicate the progress through a cold experience. The user interface 160 may also include a speaker, to allow audible indicators of the progress.

Fig. 3a illustrates how the user interface 160 may continuously display the temperature as it is reduced during the transition phase. Typically, each degree of temperature reduction would be displayed, so that the user can continuously follow the progress. There may also be an audible count-down of the temperature.

Fig. 3b illustrates how the user interface 160 may continuously display the time remaining of the cold phase, after the transition phase. Typically, each second of time reduction would be displayed, so that the user can continuously follow the progress. There may also be an audible count-down of the time remaining.

Fig. 3c illustrates how the user interface 160 may continuously display the progress of the cold phase through displaying icons that change during the progress. The illustrated circles could either be gradually increased in numbers (as illustrated), gradually decreased in numbers, or both (first increased in numbers and then decreased). This may also be combined with the display of time and/or temperature reduction, as illustrated in Figs. 3a-b.

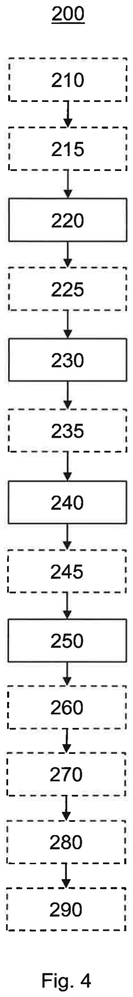

Fig. 4 schematically illustrates a method 200 for providing a cold experience to a user within an ablutionary event. The method 200 may include:
Step 220: within an ablutionary event, providing water from at least one shower head 110, 120 to a user for showering at a temperature set by the user.

Step 230: within the same ablutionary event, upon user actuation of a predetermined cold experience indicator of a user interface 160 of a shower control system 150, providing a cold experience to the user.

Step 240: during a transition phase, reducing the temperature of the water down to a predefined cold temperature, which predefined cold temperature is below a normal range of user-preferred temperatures for showering, wherein the predefined cold temperature is either a predetermined temperature or the natural temperature of the water when no hot water is supplied.

Step 250: after the transition phase, providing water at the predefined cold temperature during a cold phase for a predetermined time, and once the predetermined time has passed, ceasing to provide water to the user.

This allows a user-initiated cold experience during a shower event.

In embodiments, the transition phase lasts until the temperature reaches the predefined cold temperature or until the user actuates an emergency stop in the shower control system 150, thereby activating 260 an emergency stop functionality, and the cold phase lasts for a predetermined time or until the user actuates the emergency stop in the shower control system, thereby activating 260 the emergency stop functionality. This enables the user to quickly stop the cold experience.

The method 200 may further include one or more of:
Step 210: arranging the shower control system 150 to include a microphone 180. This allows the emergency stop functionality to react to the user for example screaming or shouting "STOP!", or to any other sound that has been predetermined to actuate the emergency stop functionality.

Step 215: arranging the shower control system 150 to include a sensor 190 that senses movement of the user. This allows the emergency stop functionality to react to for example a forceful waving of the arms by the user, or to any other movement that has been predetermined to actuate the emergency stop functionality.

Step 225: the user actuation of the predetermined cold experience indicator of the user interface 160 involving the user touching or pressing a zone or button on the user interface 160. This is a simple way for the user to initiate a cold experience.

Step 235: allowing the user to select between different predetermined levels of cold experiences, with variations in severity, on the user interface 160. This could trigger a user to progress through the levels, and thus enhance user experience.

Step 245: displaying one or more indicators of the progress of the cold experience on the user interface 160. It may be easier for a user to continue through the whole cold experience if the user can follow its progress.

Step 270: allowing the user to activate the emergency stop functionality through any user actuation of the user interface 160. This enables the user to quickly stop the cold experience, without having to check exactly which zone or button to touch or press on the user interface.

Step 280: allowing the user to activate the emergency stop functionality through making 280 a sound of a predetermined kind. This allows the emergency stop functionality to react to the user for example screaming or shouting "STOP!", or to any other sound that has been predetermined to actuate the emergency stop functionality.

Step 290: allowing the user to activate the emergency stop functionality through making a movement of a predetermined kind. This allows the emergency stop functionality to react to for example a forceful waving of the arms by the user, or to any other movement that has been predetermined to actuate the emergency stop functionality.

The above steps may be effected in any order that makes technical sense. Some of the steps may also be effected simultaneously with each other.

The foregoing disclosure is not intended to limit the present invention to the precise forms or particular fields of use disclosed. It is contemplated that various alternate embodiments and/or modifications to the present invention, whether explicitly described or implied herein, are possible in light of the disclosure. Accordingly, the scope of the invention is defined only by the claims.

## Claims

1. An ablutionary system (100) configured to provide water from at least one shower head (110, 120) to a user, the ablutionary system comprising a shower control system (150) having a user interface (160), wherein the shower control system (150) is configured to:
within an ablutionary event, provide water to a user at a temperature set by the user; and
within the same ablutionary event, upon user actuation of a predetermined cold experience indicator (170) of the user interface (160), provide a cold experience to the user, the cold experience including:
a transition phase, during which the shower control system (150) is arranged to reduce the temperature of the water down to a predefined cold temperature, which predefined cold temperature is below a normal range of user-preferred temperatures for showering, wherein the predefined cold temperature is either a predetermined temperature or the natural temperature of the water when no hot water is supplied; and
a cold phase, during which the shower control system (150) is arranged to provide water at the predefined cold temperature for a predetermined time,
wherein the ablutionary system (100) is arranged to cease to provide water to the user once the predetermined time has passed.

2. An ablutionary system according to claim 1, wherein the shower control system (150) is configured to provide an emergency stop functionality during the cold experience, by ceasing to provide water to the user upon actuation of an emergency stop.

3. An ablutionary system according to claim 2, wherein the shower control system (150) is configured to, during the cold experience, provide the emergency stop functionality upon any user actuation of the user interface (160).

4. An ablutionary system according to claim 2 or 3, wherein the shower control system (150) comprises:
a microphone (180), and is configured to, during the cold experience, provide the emergency stop functionality by reacting to sound of a predetermined kind; and/or
a sensor (190) that senses movement of the user, and is configured to, during the cold experience, provide the emergency stop functionality by reacting to movement of a predetermined kind.

5. An ablutionary system according to any one of claims 1-4, wherein the predetermined cold experience indicator (170) is a zone or button on the user interface (160), which zone or button is configured so that the predetermined cold experience indicator (170) is actuated by the zone or button being touched or pressed by the user.

6. An ablutionary system according to any one of claims 1-5, wherein the user interface (160) is configured to allow the user to select between different predetermined levels of cold experiences, with variations in severity.

7. An ablutionary system according to any one of claims 1-6, wherein the user interface (160) is configured to display one or more indicators of the progress of the cold experience to the user.

8. A method (200) for providing a cold experience to a user within an ablutionary event, the method comprising:
within an ablutionary event, providing (220) water from at least one shower head (110, 120) to a user for showering at a temperature set by the user; and
within the same ablutionary event, upon user actuation of a predetermined cold experience indicator of a user interface (160) of a shower control system (150), providing (230) a cold experience to the user, by:
during a transition phase, reducing (240) the temperature of the water down to a predefined cold temperature, which predefined cold temperature is below a normal range of user-preferred temperatures for showering, wherein the predefined cold temperature is either a predetermined temperature or the natural temperature of the water when no hot water is supplied; and
after the transition phase, providing (250) water at the predefined cold temperature during a cold phase for a predetermined time; and
once the predetermined time has passed, ceasing to provide water to the user.

9. A method (200) according to claim 8, wherein the transition phase lasts until the temperature reaches the predefined cold temperature or until the user actuates an emergency stop in the shower control system (150), thereby activating (260) an emergency stop functionality, and wherein during the cold phase, water is provided at the predefined cold temperature for a predetermined time or until the user actuates the emergency stop in the shower control system (150), thereby activating (260) the emergency stop functionality.

10. A method (200) according to claim 9, further comprising allowing the user to activate the emergency stop functionality through any user actuation (270) of the user interface (160).

11. A method (200) according to claim 9 or 10, further comprising arranging (210) the shower control system (150) to comprise a microphone (180), and allowing the user to activate the emergency stop functionality through making (280) a sound of a predetermined kind.

12. A method (200) according to any one of claims 9-11, further comprising arranging (215) the shower control system (150) to comprise a sensor (190) that senses movement of the user, and allowing the user to activate the emergency stop functionality through making (280) a movement of a predetermined kind.

13. A method (200) according to any one of claims 8-12, further comprising allowing (225) the user to actuate the predetermined cold experience indicator of the user interface (160) by touching or pressing a zone or button on the user interface (160).

14. A method (200) according to any one of claims 8-13, further comprising allowing (235) the user to select between different predetermined levels of cold experiences, with variations in severity, on the user interface (160).

15. A method (200) according to any one of claims 8-14, further comprising displaying (245) one or more indicators of the progress of the cold experience on the user interface (160).
